# EUROPÄISCHE PATENTSCHRIFT

(11) **EP 1 452 835 B1**
(45) Veröffentlichungstag und Bekanntmachung des Hinweises auf die Patenterteilung: **28.11.2012**
(21) Anmeldenummer: 03027673.7
(22) Anmeldetag: 03.12.2003
(51) Int. Cl.: G01D 5/347, G01D 11/02, G01D 11/24, G01P 3/44

(54) **Winkelmessgerät mit abgedichtetem Wälzlager**
Angular encoder with sealed roller bearing
Dispositif de mesure d'angles avec palier à roulement étanche

(30) Priorität: 25.02.2003 DE 10308194
(43) Veröffentlichungstag der Anmeldung: 01.09.2004
(73) Patentinhaber: Dr. Johannes Heidenhain GmbH, 83292 Traunreut (DE)
(72) Erfinder: Angerpointner, Ludwig, 81247 München (DE)

(56) Entgegenhaltungen:
- WO-A-00/53942
- DE-A- 4 436 724
- US-B1- 6 338 576

## Beschreibung

Die Erfindung betrifft ein Winkelmessgerät mit zwei relativ zueinander verdrehbaren Bauteilen. Ebenso bezieht sich die Erfindung auf die Verwendung dieses Gerätes bei Werkzeugmaschinen oder im Freien arbeitende Anlagen, insbesondere Radaranlagen.

Derartige Winkelmessgeräte, häufig auch als Drehgeber bezeichnet, dienen zur Messung von Drehbewegungen einer Welle über eine oder mehrere Umdrehungen. Die Drehbewegung wird dabei entweder inkremental oder absolut erfasst, der ausgegebene Messwert ist abhängig davon eine Folge von Zählimpulsen ein Zählerwert oder ein Codewort. In Verbindung mit Zahnstangen oder Gewindespindeln lassen sich mit derartigen Winkelmessgeräten auch lineare Bewegungen messen. Winkelmessgeräte werden insbesondere bei Werkzeugmaschinen beziehungsweise im Freien arbeitende Anlagen, insbesondere Radaranlagen für die Messung von rotatorischen Bewegungen eingesetzt. Die Bestimmung der Drehwinkel auf nur wenige Winkelsekunden genau ist beispielsweise für Rundtische oder Schwenkköpfe von Werkzeugmaschinen, C-Achsen von Drehmaschinen aber auch bei Radaranlagen von entscheidender Bedeutung. Derartige Winkelmessgeräte werden häufig an Stellen eingesetzt, wo vergleichsweise raue Umgebungsbedingen vorherrschen. So ist das Eindringen von Schmieröl oder Kühlflüssigkeit bzw. Umgebungsfeuchtigkeit eine häufige Ausfallursache von Winkelmessgeräten im Betrieb an Werkzeugmaschinen beziehungsweise bei im Freien arbeitenden Radaranlagen.

ln der Offenlegungsschrift DE 101 155 49 A der Anmelderin ist ein Winkelmessgerät offenbart, bei welchem in dem Spaltring zwischen dem Rotor und der Stirnseite eines Statorgehäuses, das in Form einer Aluminiumkappe ausgeführt ist, eine V-Dichtung vorgesehen ist. Damit die Dichtlippe der entsprechenden V-Dichtung nicht in die Aluminiumkappe einlaufen kann, wurde dort am Berührumfang ein vergleichsweise härterer Stahlring eingesetzt.

Dieses bekannte Winkelmessgerät weist den Nachteil auf, dass es relativ aufwändig herzustellen ist.

Der Erfindung liegt daher die Aufgabe zugrunde, ein Winkelmessgerät zu schaffen, in das auch bei rauen Umgebungsbedingungen keine Flüssigkeit aus der Umgebung eindringt und welches kostengünstig herstellbar ist.

Diese Aufgabe wird durch ein Winkelmessgerät gemäß Anspruch 1 gelöst.

Das erfindungsgemäße Winkelmessgerät soll bei drehbaren Maschinenteilen von Werkzeugmaschinen beziehungsweise im Freien arbeitenden Anlagen verwendet werden, insbesondere bei Antennen von Radaranlagen, dies ist im Anspruch 7 angegeben.

Vorteilhafte Ausführungsformen des erfindungsgemäßen Winkelmessgerätes ergeben sich aus den Maßnahmen in den von Anspruch 1 abhängigen Ansprüchen.

Demnach besteht das Winkelmessgerät aus einem innenliegenden Bauteil und einem außenliegenden Bauteil, welches das innenliegende mit Vorteil über den Umfang völlig umschließt. Häufig wird das innenliegende Bauteil als Rotor, insbesondere als drehbare Hohlwelle ausgestaltet. Das außenliegende Bauteil ist dann als Stator ausgeführt, dessen flanschartig gestaltetes Gehäuseteil in einer bevorzugten Ausführung gleichzeitig als Anbaufläche beispielsweise an einem entsprechenden Maschinenteil, etwa einem Gegenflansch einer Radaranlage dient. Zwischen Rotor und Stator ist zur Lagerung ein Wälzlager eingebaut.

Die Erfindung beruht unter anderem auf dem Gedanken, dass die Oberfläche eines Lagerringes eines Wälzlagers gleichzeitig als Gleitfläche, auf der im Betrieb des Winkelmessgerätes eine Dichtung gleitet, verwendet wird. Darüber hinaus wird ein Bauelement, z. B. eine Wellenmutter, zum Vorspannen oder Anpressen einer Dichtung gegen den Lagerring verwendet und gegebenenfalls auch zum Vorspannen bzw. axialen Sicherung einer Lagereinheit.

Die Erfindung hat den Vorteil, dass ein Winkelmessgerät in einfacher und kostengünstiger Bauweise geschaffen werden kann, weil der ohnehin aus hartem Material hergestellte Lagerring gleichzeitig als Gleitfläche dient. Mit Vorteil besteht die Dichtung aus einem Polymer, etwa einem Silikonmaterial oder einem Kunststoffkautschuk.

Weitere Vorteile, sowie Einzelheiten des erfindungsgemäßen Winkelmessgerätes ergeben sich aus der nachfolgenden Beschreibung eines möglichen Ausführungsbeispieles anhand der beiliegenden Figur.

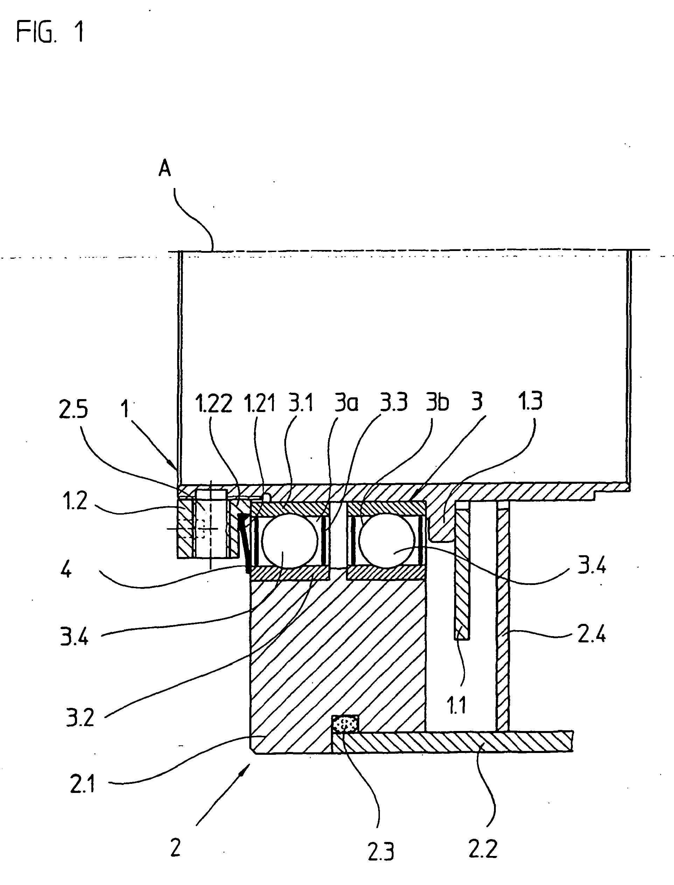

Es zeigt die
- Figur 1: eine Längsschnittdarstellung durch einen Teilbereich eines Winkelmessgerätes;

Gemäß der Figur 1 besteht das Winkelmessgerät aus einer innenliegenden Hohlwelle 1 und einem außenliegenden Stator 2. Die Hohlwelle 1 und der Stator 2 sind durch eine Lagereinheit 3 relativ zueinander drehbar gelagert. Der Stator 2 umfasst einen Statorflansch 2.1 und ein Statorgehäuse 2.2. Der Statorflansch 2.1 und das Statorgehäuse 2.2 sind mit Hilfe von in der Figur 1 nicht dargestellten Schrauben verbunden. Das Statorgehäuse 2.2 dient zusammen mit dem Statorflansch 2.1 u. a. dazu messtechnische Einrichtungen des Winkelmessgerätes, zu denen eine Leiterplatte 2.4 gehört, gegen äußere Einflüsse zu schützen. Zu diesem Zweck ist es entsprechend stabil ausgeführt. Zur hermetischen Abdichtung gegenüber der Umgebung ist in einer umlaufenden Nut des Statorflansches 2.1 ein O-Ring 2.3 untergebracht.

Die Lagereinheit 3 besteht aus zwei Wälzlagern, im gezeigten Beispiel Rillenkugellagern 3a, 3b, welche jeweils einen lnnenring 3.1 und einen Außenring 3.2 und dazwischen liegende Kugeln 3.4 aufweisen. Sowohl die Innenringe 3.1 als auch die Außenringe 3.2 bestehen aus hartem Lagerstahl. Zudem haben die Rillenkugellager 3a, 3b integrierte Dichtungen, im Folgenden als Lagerdichtringe 3.3 bezeichnet. Innerhalb des Statorgehäuses 2.2 ist eine Teilungsscheibe 1.1 an einem Absatz 1.3 der Hohlwelle 1 drehfest verbunden, im gezeigten Beispiel durch Kleben. Auf der Teilungsscheibe 1.1, die hier aus Glas besteht, ist ein periodisches Strichmuster als Winkelteilung aufgebracht.

Darüber hinaus umfassen die messtechnischen Einrichtungen des Winkelmessgerätes eine Abtasteinheit mit einer Abtastplatte, eine Lampe und einen Kondensor (diese Elemente sind in der Figur 1 nicht dargestellt). Die Abtasteinheit tastet mittels der Lampe und dem Kondensor sowie der Abtastplatte und Fotoelementen auf der Leiterplatte 2.4 die Winkelteilung der Teilungsscheibe 1 ab. Die fotoelektrisch erzeugten Signale werden durch elektronische Bausteine auf der Leiterplatte 2.4 weiterverarbeitet.

Die messtechnischen Einrichtungen sind naturgemäß äußerst empfindlich gegenüber äußeren Einflüssen, so dass beispielsweise eindringende Feuchtigkeit zu einem Ausfall des Winkelmessgerätes führt. Die bisher beschriebenen baulichen Maßnahmen, nämlich der Einbau des O-Ringes 2.3 und der Lagerdichtringe 3.3 bieten keine ausreichende Sicherheit bei der Verwendung eines derartigen Winkelmessgerätes in manchen Werkzeugmaschinen oder in einer im Freien stehenden Radaranlage. Insbesondere hat sich in der Praxis gezeigt, dass die Lagerdichtringe 3.3 keine ausreichende Sicherheit gegen eindringende Flüssigkeiten bieten, so dass mit nicht zu vernachlässigender Wahrscheinlichkeit eindringende Flüssigkeiten durch die Rillenkugellager 3a, 3b hindurch zu den messtechnischen Einrichtungen gelangen würde.

Aus diesem Grund wird eine weitere Dichtung 4 vorgesehen, die, wie im Folgendem beschrieben, mit einer Wellenmutter 1.2 vorgespannt wird. Die Wellenmutter 1.2 weist ein Innengewinde auf, welches auf ein Außengewinde der Hohlwelle 1 passt. Für die Montage des Winkelmessgerätes auf eine Welle, beispielsweise der Welle einer Radaranlage, ist in der Wellenmutter 1.2 eine radial nach innen gerichtete Gewindebohrung 2.5 angeordnet. In diese Gewindebohrung 2.5 wird eine entsprechende Schraube gedreht, so dass die Hohlwelle 1 an einer dafür vorgesehenen Nut leicht verformt wird. Auf diese Weise kann die Welle der Radaranlage mit der Hohlwelle 1 auf einfache Weise drehfest verbunden werden. Durch diese Bauweise kann auch gleichzeitig eine Sicherung der Wellenmutter 1.2 gegen Lösen erreicht werden.

Darüber hinaus hat die Wellenmutter 1.2 eine umlaufende Ausnehmung 1.21, die in Radialrichtung innen durch einen Steg 1.22 begrenzt ist. In diese Ausnehmung 1.21 wird bei der Montage des Winkelmessgerätes die ringförmige Dichtung 4 eingelegt und zwar so, dass der Innenumfang bzw. das Öffnungsloch der Dichtung 4 an dem Steg 1.22 anliegt. Es hat sich in der Praxis gezeigt, dass es vorteilhaft ist, wenn der Steg 1.22 zu diesem Zweck ein Schräge von etwa 7° aufweist, also eine leicht konische Form. Zur Unterstützung der Haftung und der Dichtfähigkeit kann am Steg 1.22 im Bereich der Fügestelle bei Raumtemperatur vemetzendes Silikon aufgetragen werden. Die Dichtung 4, welche im gezeigten Beispiel aus einem Silikonmaterial besteht, ist nicht als ebener Ringkörper ausgeführt, sondern hat eine Gestalt in Form eines hohlen Kegelstumpfes. Mit anderen Worten liegt also die Umfangslinie des inneren Loches der nicht vorgespannten Dichtung in einer anderen Ebene als die Umfangslinie der Außenseite der Dichtung 4. Die Dichtung 4 ist also an der Wellenmutter 1.2 drehfest angebracht, so dass im Betrieb des Winkelmessgerätes zwischen Wellenmutter 1.2 und Dichtung 4 keine Relativbewegung möglich ist. Darüber hinaus ist der ringförmige Fügespalt zwischen der Dichtung 4 und der Wellenmutter 1.2 absolut dicht.

Im Zuge der Montage des Winkelmessgerätes wird die Wellenmutter 1.2, als Bauelement zur Vorspannung der Dichtung 4, zusammen mit der Dichtung 4 auf die Hohlwelle 1 geschraubt. Dadurch wird eine Kraft in axialer Richtung erzeugt, wobei der Steg 1.22 der Wellenmutter 1.2 auf den Innenring 3.1 des Rillenkugellagers 3a drückt. Auf diese Weise wird die gesamte Lagereinheit 3 durch die Wellenmutter 1.2 an den Absatz 1.3 der Hohlwelle 1 gedrückt, so dass nach erfolgter Montage die Lagereinheit 3 spielfrei axial gesichert und vorgespannt ist. Gleichzeitig liegt dann der äußere Bereich der Dichtung 4 an dem Außenring 3.2 des Rillenkugellagers 3a auf, so dass auch die Dichtung 4 vorgespannt ist und eine gewisse Dichtkraft durch die elastische Verformung der Dichtung 4 zwischen der Dichtung 4 und dem entsprechenden Außenring 3.2 gegeben ist. Somit wird eine optimale Abdichtung des Innenraumes des Winkelmessgerätes gegenüber der Umgebung erreicht. Dabei wird die harte und glatte stirnseitige Oberfläche des Außenringes 3.2 des Rillenkugellagers 3a als Gleitfläche für die relativ dazu drehbare Dichtung 4 verwendet. Es muss also kein zusätzliches Maschinenelement mit einer entsprechenden Gleitfläche vorgesehen werden.

Die Vorspannung beruht also im gezeigten Beispiel auf der elastischen Verformung der Dichtung 4. Alternativ oder ergänzend kann aber auch ein spezielles Federelement zum Aufbringen einer Vorspannung verformt werden.

Die Bauart mit der an der Hohlwelle 1 festgemachten Dichtung 4 (bzw. mit der relativen Drehbarkeit der Dichtung zum Außenring 3.2) hat im Übrigen den Vorteil, dass die Flüssigkeit auf der Dichtung 4 durch die Fliehkräfte im Betrieb des Winkelmessgerätes radial nach außen weg bewegt wird.

## Patentansprüche

1. Winkelmessgerät zur Messung der Winkellage zweier relativ um eine Achse (A) zueinander drehbarer Bauteile (1, 2), wobei das Winkelmessgerät mindestens ein Wälzlager (3a; 3b) mit zwei Lagerringen (3.1, 3.2), nämlich einen Innenring (3.1) und einen Außenring (3.2), und eine Dichtung (4) umfasst, wobei die Dichtung (4) durch ein Bauelement (1.2) in einer Richtung mit einer Richtungskomponente parallel zur Achse (A) vorgespannt ist, so dass diese unter dieser Vorspannung den Auβenring (3.2) berührt,
**dadurch gekennzeichnet, dass**
die Dichtung (4) relativ zum Außenring (3.2) drehbar ist und zumindest im nicht vorgespannten Zustand eine Geometrie gemäß eines hohlen Kegelstumpfes aufweist.

2. Winkelmessgerät nach Anspruch 1, **dadurch gekennzeichnet, dass** die Wälzlager (3a; 3b) integrierte Dichtungen (3.3) aufweisen.

3. Winkelmessgerät nach einem der vorhergehenden Ansprüche, **dadurch gekennzeichnet, dass** durch das Bauelement (1.2) eine Kraft in einer Richtung mit einer Richtungskomponente parallel zur Achse (A) zur axialen Sicherung des Wälzlagers (3a; 3b) aufbringbar ist.

4. Winkelmessgerät nach einem der vorhergehenden Ansprüche, **dadurch gekennzeichnet, dass** das Bauelement (1.2) eine Wellenmutter ist.

5. Verwendung eines Winkelmessgerätes gemäß dem Anspruch 1 an drehbaren Maschinenteilen von Werkzeugmaschinen oder im Freien betriebenen Anlagen, insbesondere an Radaranlagen.

## Claims

1. Angular encoder for measuring the angular position of two components (1, 2) relatively rotatable with respect to one another about an axis (A), the angular encoder comprising at least one rolling bearing (3a; 3b) with two bearing rings (3.1, 3.2), to be precise an inner ring (3.1) and an outer ring (3.2), and a seal (4), the seal (4) being prestressed by a structural element (1.2) in a direction having a direction component parallel to the axis (A), so that the said seal, under this prestress, touches the outer ring (3.2), **characterized in that** the seal (4) is rotatable in relation to the outer ring (3.2) and, at least in the non-prestressed state, has a geometry corresponding to a hollow cone frustum.

2. Angular encoder according to Claim 1, **characterized in that** the rolling bearings (3a; 3b) have integrated seals (3.3).

3. Angular encoder according to one of the preceding claims, **characterized in that** a force can be applied by the structural element (1.2) in a direction having a direction component parallel to the axis (A) for the purpose of securing the rolling bearing (3a; 3b) axially.

4. Angular encoder according to one of the preceding claims, **characterized in that** the structural element (1.2) is a shaft nut.

5. Use of an angular encoder according to Claim 1 on rotatable machine parts of machine tools or on plants operated in the open, in particular on radar installations.

## Revendications

1. Dispositif de mesure d'angle pour la mesure de la position angulaire de deux composants (1, 2) pouvant tourner l'un par rapport à l'autre autour d'un axe (A), le dispositif de mesure angulaire comprenant au moins un palier à roulement (3a ; 3b) avec deux bagues de palier (3.1, 3.2), à savoir une bague interne (3.1) et une bague externe (3.2), et un joint d'étanchéité (4), le joint d'étanchéité (4) étant précontraint par un élément structurel (1.2) dans une direction avec une composante de direction parallèle à l'axe (A), de telle sorte que celui-ci vienne en contact avec la bague externe (3.2) sous l'effet de cette précontrainte,
**caractérisé en ce que**
le joint d'étanchéité (4) est rotatif par rapport à la bague externe (3.2) et présente, au moins dans l'état non précontraint, une géométrie suivant un cône tronqué creux.

2. Dispositif de mesure d'angle selon la revendication 1, **caractérisé en ce que** les paliers à roulement (3a ; 3b) présentent des joints d'étanchéité intégrés (3.3).

3. Dispositif de mesure d'angle selon l'une quelconque des revendications précédentes, **caractérisé en ce que** l'élément structurel (1.2) permet d'appliquer une force dans une direction avec une composante de direction parallèle à l'axe (A) en vue de la fixation axiale du palier à roulement (3a ; 3b).

4. Dispositif de mesure d'angle selon l'une quelconque des revendications précédentes, **caractérisé en ce que** l'élément structurel (1.2) est un écrou d'arbre.

5. Utilisant d'un dispositif de mesure d'angle selon la revendication 1, sur des pièces de machine rotatives de machines-outils, ou dans des installations entraînées en espace libre, notamment des installations radar.
